(19) Europäisches Patentamt
European Patent Office
Office européen des brevets

(11) **EP 3 357 151 B1**

(12) **FASCICULE DE BREVET EUROPEEN**

(45) Date de publication et mention
de la délivrance du brevet:
**06.01.2021 Bulletin 2021/01**

(51) Int Cl.:
***H02M 1/12*** *(2006.01)*  ***H02M 7/06*** *(2006.01)*
***H02M 7/08*** *(2006.01)*

(21) Numéro de dépôt: **16785235.9**

(22) Date de dépôt: **28.09.2016**

(86) Numéro de dépôt international:
**PCT/FR2016/052459**

(87) Numéro de publication internationale:
**WO 2017/055739 (06.04.2017 Gazette 2017/14)**

(54) **TRANSFORMATEUR REDRESSEUR DODÉCAPHASÉ**

12-PHASIGER TRANSFORMATOR-GLEICHRICHTER

TWELVE-PHASE TRANSFORMER-RECTIFIER

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **28.09.2015 FR 1559124**

(43) Date de publication de la demande:
**08.08.2018 Bulletin 2018/32**

(73) Titulaire: **Safran Electrical & Power
31702 Blagnac Cedex (FR)**

(72) Inventeur: **HENRARD, Pierre
31220 Cazeres (FR)**

(74) Mandataire: **Cabinet Beau de Loménie
158, rue de l'Université
75340 Paris Cedex 07 (FR)**

(56) Documents cités:
**WO-A1-2012/116263     US-A- 4 255 784
US-B1- 6 198 647**

## Description

Arrière-plan de l'invention

L'invention concerne un transformateur redresseur électrique statique dodécaphasé.

Un transformateur électrique est une machine électrique comportant un circuit primaire et un circuit secondaire. Le transformateur permet de modifier les valeurs de tension et d'intensité du courant délivrées par une source d'énergie électrique alternative au circuit primaire du transformateur.

Habituellement à bord des aéronefs lorsqu'on a besoin de convertir une tension alternative triphasée en tension continue en assurant un isolement galvanique, on utilise un transformateur redresseur statique dodécaphasé, appelé aussi TRU 12 pulse.

Dans un transformateur statique, l'énergie est transférée du circuit primaire au circuit secondaire par l'intermédiaire d'un circuit magnétique constitué par la carcasse du transformateur. Ces deux circuits sont alors magnétiquement couplés ce qui permet de réaliser un isolement galvanique entre les deux circuits.

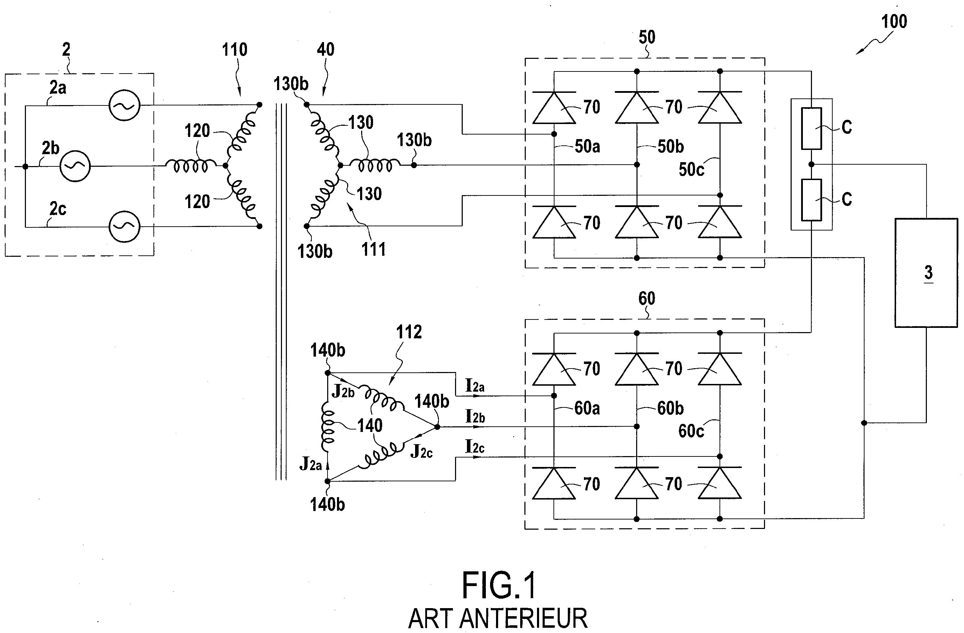

Comme cela est illustré sur la figure 1, les transformateurs redresseurs 100 dodécaphasés généralement utilisés sont constitués d'un transformateur 40 suivis de deux redresseurs héxaphasés 50 et 60 formés chacun par un pont de six diodes 70 et couplés à une charge 3 via deux selfs d'interphase C. Le transformateur 40 comprend un circuit primaire 110 comportant trois bobines primaires 120 montées en étoile et couplées au réseau d'alimentation 2 et deux circuits secondaires 111 et 112.

Le premier circuit secondaire 111 comprend trois premières bobines secondaires 130 montées en étoile et dont les bornes libres 130b des bobines 130 sont chacune couplées à une branche 50a, 50b, 50c du premier redresseur triphasé 50.

Le second circuit secondaire 112 comprend trois secondes bobines secondaires 140 montées en triangle, les trois nœuds 140b du triangles étant chacun couplés à une branche 60b du second redresseur triphasé 60.

Cette topologie répond aux exigences de qualité réseau attendues pour les réseaux électriques aéronautiques.

Dans un tel montage, les tensions simples secondaires du transformateur sont déphasées de 30°, soit $\pi/6$. Du fait de ce déphasage de 30° entre les tensions simples secondaires, on retrouve un déphasage de 30° entre les deux courants de ligne secondaire.

Si on appelle m' le rapport de transformation entre le bobinage primaire étoile et le secondaire étoile et m le rapport de transformation entre le bobinage primaire étoile et le secondaire triangle, alors on peut démontrer qu'il existe une relation simple entre m et m' pour que le montage fonctionne : $m = \sqrt{3}m'$.

Le courant circulant dans les enroulements secondaires peut être déterminé simplement. Pour le secondaire en triangle, il existe une relation entre les courants de ligne secondaire et les courants d'enroulement. Cette relation est valable temporellement et on peut écrire :

$$\begin{cases} J_{2a}(t) = I_{2a}(t) - I_{2c}(t) \\ J_{2b}(t) = I_{2b}(t) - I_{2a}(t) \\ J_{2c}(t) = I_{2c}(t) - I_{2b}(t) \end{cases}$$

Avec $J_{2a}$, $J_{2b}$, $J_{2c}$ les courants circulant respectivement dans les trois secondes bobines secondaires 140 montées en triangle, et $I_{2a}$, $I_{2b}$, $I_{2c}$ les courants respectivement délivrés à chacune des trois branches 60a, 60b, 60c du second circuit redresseur 60 auquel les secondes bobines secondaires 140 montées en triangle sont couplées, comme illustré sur la figure 1.

Le transformateur redresseur dodécaphasé convertit les tensions triphasées alternatives, par exemple de tension efficace de 115 V ou de 230 V, en une tension continue de 28 V ou autre par exemple. Cette transformation est réalisée grâce au transformateur et aux deux redresseurs triphasés.

Il n'y a à ce jour pas de solution simple, et fiable à base de transformateur redresseur dodécaphasé permettant d'améliorer encore plus efficacement la qualité du réseau électrique.

Le document WO 2012/116263 un transformateur redresseur électrique dont le primaire est disposé en étoile.

Objet et résumé de l'invention

L'invention vise à fournir une configuration alternative du circuit secondaire du transformateur permettant d'améliorer la qualité du circuit électrique en minimisant voire en éliminant les premières fréquences harmoniques de courant du réseau d'alimentation électrique, soulageant ainsi les générateurs électriques et améliorant le facteur de puissance global du réseau électrique.

Le but est aussi de proposer une solution de conversion alternatif-continu fiable, la plus simple possible, et la moins couteuse avec une densité de puissance au moins équivalente aux équipements aujourd'hui installés sur un avion.

Un objet de l'invention propose un transformateur redresseur électrique statique dodécaphasé comprenant un transformateur, et un premier circuit redresseur hexaphasé et un second circuit redresseur hexaphasé destinés à être couplés à une charge, le transformateur comportant un circuit primaire doté de trois bobines primaires disposées selon une configuration en étoile et un circuit secondaire comportant trois premières bobines secondaires et trois secondes bobines secondaires distinctes des premières bobines secondaires.

3 EP 3 357 151 B1 4

Selon une caractéristique générale de l'invention, le circuit secondaire du transformateur comprend une boucle de six bobines secondaires formée par un raccordement électrique des trois premières bobines secondaires avec les trois secondes bobines secondaires du circuit secondaire.

Le circuit secondaire du transformateur propose ainsi une configuration alternative du circuit secondaire d'un transformateur présentant une unique boucle secondaire formée par les six bobines.

Cette configuration permet en outre de fournir une solution de conversion alternatif-continu la plus simple possible et la moins couteuse, avec une densité de puissance au moins équivalente aux équipements aujourd'hui installés sur un avion.

De plus, chaque seconde bobine secondaire du transformateur est raccordée entre deux premières bobines secondaires et chaque première bobine secondaire est raccordée entre deux secondes bobines secondaires.

Ainsi l'enroulement secondaire hexagonal du circuit secondaire est équivalent fonctionnellement à deux enroulements triangles imbriqués. Cet agencement permet au moins de fournir des tensions de même valeur en sortie, et ainsi de délivrer des tensions de même valeur aux premier et second circuits redresseurs.

De plus, les premières bobines secondaires du transformateur présentent un premier sens d'enroulement et les secondes bobines secondaires présentent un second sens d'enroulement opposé au premier sens d'enroulement.

La mise en opposition des sens d'enroulement des premières et secondes bobines secondaires en plus de leur alternance permet d'améliorer la qualité du circuit électrique en minimisant voire en éliminant les premières fréquences harmoniques de courant du réseau d'alimentation électrique, soulageant ainsi les générateurs électriques et améliorant le facteur de puissance global du réseau électrique.

De plus, les trois premières bobines secondaires présentent une première dimension et les trois secondes bobines secondaires présentent une seconde dimension distincte de la première dimension, les première et seconde dimensions étant choisies de sorte que les trois tensions mesurées entre deux bornes de sortie de premières bobines secondaires présentent un déphasage de 30° avec les trois tensions mesurées entre deux bornes de sortie de secondes bobines secondaires.

Afin de répondre aux exigences de qualité du réseau électrique à bord d'un aéronef, le déphasage entre les deux triangles formés par le circuit secondaire hexagonal doit être de 30°, soit π/6, comme pour un transformateur redresseur classique.

Le déphasage de 30° entre les deux circuits secondaires équivalents triangulaires permet de répondre aux exigences d'harmoniques de courant demandées par les normes aéronautiques.

Ce dimensionnement des premières et secondes bobines secondaires permet en outre de configurer le transformateur pour obtenir un déphasage de 15° et de 45° entre les tensions secondaires mesurées sur les circuits secondaires et les tensions primaires mesurées sur le circuit primaire.

De plus, l'enroulement de chaque bobine secondaire du transformateur s'étend d'une première borne de raccordement électrique à une seconde borne de raccordement électrique, les secondes bornes des premières et secondes bobines étant électriquement raccordées au premier circuit redresseur triphasé et les premières bornes des premières et secondes bobines étant électriquement raccordées au second circuit redresseur hexaphasé.

Cet agencement permet de délivrer trois premières tensions triphasées identiques en amplitude au premier circuit redresseur et trois secondes tensions triphasées identiques en amplitude au second circuit redresseur, les six tensions étant identiques en amplitude.

Un autre objet de l'invention propose un système électrique de conversion de tension comprenant au moins un transformateur redresseur électrique tel que défini ci-dessus.

Encore un autre objet de l'invention propose un aéronef comprenant au moins un système électrique de conversion de tension tel que défini ci-dessus.

Brève description des dessins.

L'invention sera mieux comprise à la lecture faite ci-après, à titre indicatif mais non limitatif, en référence au dessin annexé sur lequel :

- la figure unique 1, déjà présentée, illustre un transformateur redresseur selon l'état de la technique ;
- la figure 2 présente de manière schématique un transformateur redresseur selon un mode de réalisation de l'invention ;
- la figure 3 illustre schématiquement le transformateur du transformateur redresseur de la figure 2 ;
- la figure 4 est une représentation graphique du courant de phase d'entrée d'un transformateur redresseur classique selon l'art antérieur ;
- la figure 5 est une représentation graphique du courant de phase d'entrée d'un transformateur redresseur selon un mode de réalisation de l'invention ;
- la figure 6 est une représentation graphique du courant de phase d'entrée d'un transformateur redresseur 24 pulse selon un mode de réalisation de l'invention.

Description détaillée de modes de réalisation

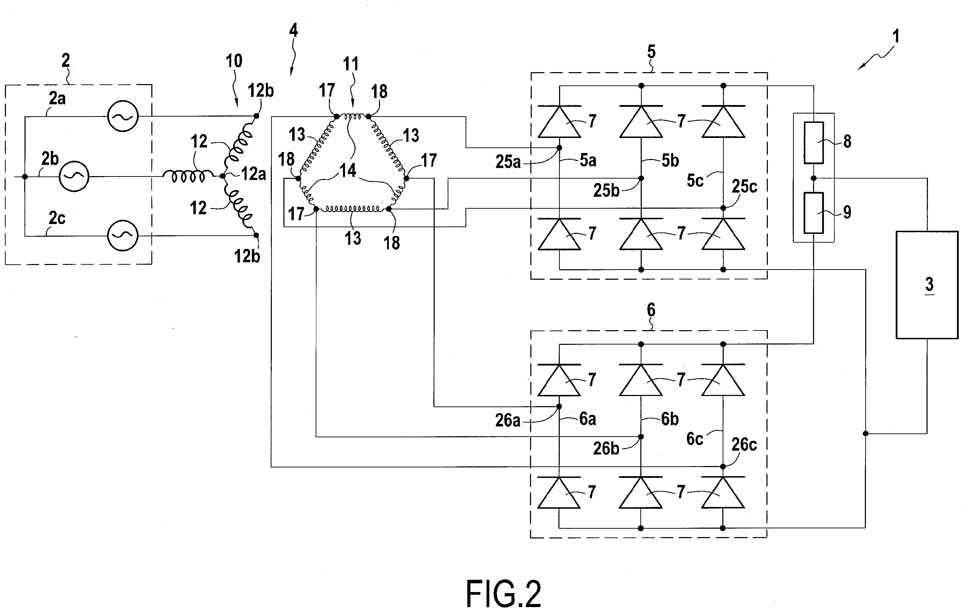

La figure 2 présente schématiquement un système électrique comprenant un transformateur redresseur électrique dodécaphasé 1 selon un mode de réalisation de l'invention. Le transformateur redresseur 1 est couplé à un réseau électrique 2 en entrée et à une charge 3 en sortie via des selfs d'interphases 8 et 9.

Le transformateur redresseur 1 comprend un transformateur 4, un premier redresseur hexaphasé 5 et un second redresseur hexaphasé 6.

Chaque redresseur hexaphasé 5 et 6 est formé par un pont de six diodes 7 montées en trois branches 5a, 5b, 5c et 6a, 6b, 6c de deux diodes 7 montées dans le même sens passant. Chaque branche 5a, 5b, 5c et 6a, 6b, 6c d'un redresseur hexaphasé 5 et 6 comprend une borne d'entrée 25a, 25b, 25c et 26a, 26b, 26c disposée entre les deux diodes 7 de la branche 5a, 5b, 5c ou 6a, 6b, 6c de sorte qu'une première diode 7 soit passante pour un courant positif circulant dans la branche 5a, 5b, 5c ou 6a, 6b, 6c tandis que la seconde diode 7 est bloquante et, inversement, que la seconde diode 7 soit passante pour un courant négatif circulant dans la branche 5a, 5b, 5c ou 6a, 6b, 6c tandis que la première diode 7 est bloquante.

Chacun des deux redresseurs 5 et 6 est couplé en sortie à la charge 3 via une des deux selfs d'interphase 8 et 9.

Le transformateur 4 comporte un circuit primaire 10 et un circuit secondaire 11.

Le circuit primaire 10 est formé de trois bobines primaires 12 montées en étoile. Chaque bobine primaire 12 du circuit primaire 10 possède donc une première borne 12a couplée aux deux autres bobines primaires 12 et une seconde borne 12b distincte de la première borne 12a et électriquement raccordée à une des phases 2a, 2b, 2c du réseau électrique d'alimentation 2. La seconde borne 12b de chaque bobine primaire 12 est raccordée à une phase, 2a par exemple, distincte des phases, 2b et 2c pour l'exemple mentionné, auxquelles sont raccordées les secondes bornes 12b des deux autres bobines primaires 12.

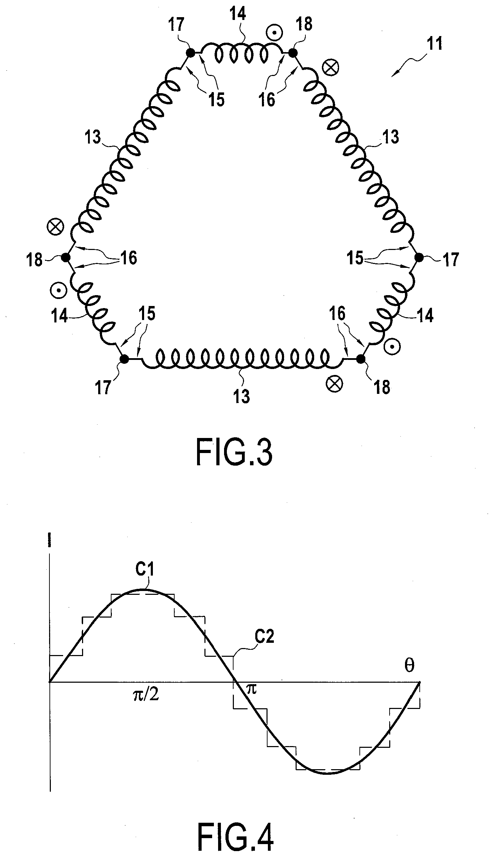

Le circuit secondaire 12, présenté plus en détail sur la figure 3, forme une boucle de six bobines secondaires 13 et 14. La boucle comportant plus particulièrement trois premières bobines secondaires 13 et trois secondes bobines secondaires 14.

Les trois premières bobines secondaires 13 possèdent une même première dimension et sont enroulées dans un même premier sens. Les trois secondes bobines secondaires 14 possèdent une même seconde dimension différente de la première dimension et un même second sens d'enroulement différent du premier sens d'enroulement.

Une bobine ne possédant que deux sens d'enroulement possibles, le second sens d'enroulement est opposé au premier sens d'enroulement. Le sens d'enroulement des bobines 13 et 14 est indiqué sur la figure 3 de manière classique à l'aide d'un point dans un cercle pour indiquer le premier sens d'enroulement et à l'aide d'une croix dans un cercle pour indiquer le second sens d'enroulement.

Ainsi, si on considère que chaque bobine secondaire 13 et 14 comprend une borne de début d'enroulement 15 et une borne de fin d'enroulement 16, les bobines secondaires 13 ou 14 étant enroulées depuis la borne de début d'enroulement 15 vers la borne de fin d'enroulement 16, comme indiqué sur la figure 3, le circuit secondaire 12 comprend trois premiers nœuds 17 à chacune desquelles sont couplées une borne de début d'enroulement 15 d'une première bobine secondaire 13 et une borne de début d'enroulement 15 d'une seconde bobine secondaire, et trois seconds nœuds 18 à chacune desquelles sont couplées une borne de fin d'enroulement 16 d'une première bobine secondaire 13 et une borne de fin d'enroulement 16 d'une seconde bobine secondaire.

Les trois premiers nœuds 17 sont raccordés électriquement chacun à une branche distincte 25a, 25b, 25c du premier circuit redresseur 5.

Les trois seconds nœuds 18 sont raccordés électriquement chacun à une branche distincte 26a, 26b, 26c du second circuit redresseur 6.

Les premières et secondes bobines secondaires 13 et 14 possèdent respectivement un premier et second dimensionnement choisis pour avoir un déphasage de 30° entre les deux tensions secondaires et de 15° et 45° entre les tensions secondaires et les tensions primaires, pour être en phase avec les fréquences fondamentales des courants primaires.

Les rapports de transformations du transformateur redresseur 1 par rapport à un transformation redresseur connu doté d'un secondaire comportant trois bobines secondaires en triangle et trois bobines secondaires en étoile comme présenté sur la figure 1 sont les suivants :

$$m_1 = 2m' sin\left(\frac{\pi}{4}\right)$$

$$m_2 = 2m' sin\left(\frac{\pi}{12}\right)$$

Avec m' le rapport de transformation entre le bobinage primaire étoile et le secondaire étoile d'un transformateur redresseur classique tel que représenté sur la figure 1, $m_1$ le rapport de transformation entre l'enroulement primaire étoile et l'enroulement présenté par le grand côté de l'hexagone du transformateur redresseur 1, c'est-à-dire avec les premières bobines secondaires 13, et $m_2$ le rapport de transformation entre l'enroulement primaire étoile et l'enroulement présenté par le petit côté de l'hexagone du transformateur redresseur 1, c'est-à-dire avec les secondes bobines secondaires 14.

Le transformateur redresseur 1 selon l'invention, lorsqu'il est utilisé en parallèle à un transformateur redresseur comprenant deux circuits secondaires comme présenté sur la figure 1 et de puissance équivalente, permet de minimiser voire d'annuler les harmoniques de courant onze et treize du réseau ainsi constitué.

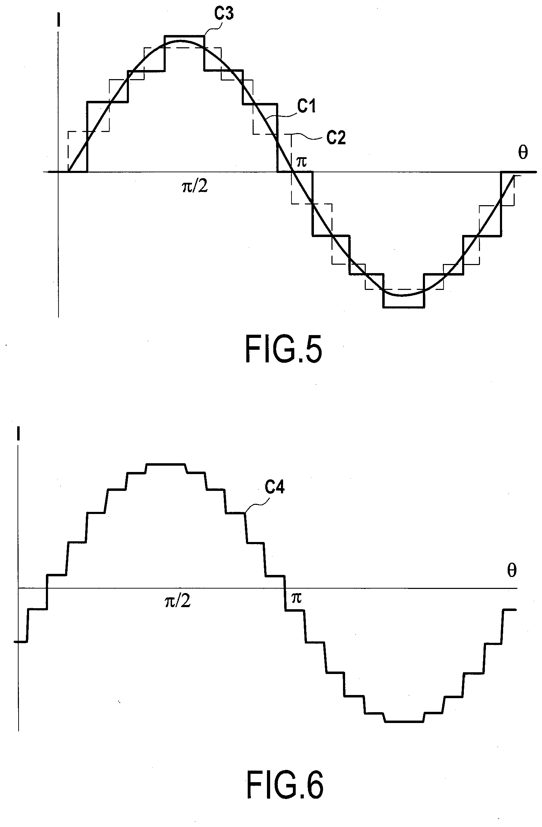

En effet, cela se vérifie notamment par la forme d'onde du courant d'entrée. La figure 4 est une représentation graphique du courant de phase d'entrée d'un transformateur redresseur classique selon l'art antérieur qui présente l'intensité I en ordonnée et la phase θ en abscisse. La courbe C1 présente la tension de phase neutre. La forme du courant d'entrée d'une phase d'un transformateur redresseur classique est donnée par la forme d'onde de la courbe C2 sur la représentation graphique de la figure 4. Et la forme du courant d'entrée pour la même phase du transformateur redresseur 1 selon l'invention est donnée par la forme d'onde de la courbe C3 sur la représentation graphique de la figure 5 qui présente l'intensité I en ordonnée et la phase θ en abscisse. Pour faciliter la comparaison, les courbes C1 et C2 de la figure 4 ont été reportées également sur la figure 5. La somme des deux courants d'entrée correspond alors à la forme du courant de phase d'entrée d'un transformateur redresseur 24 pulse donnée par la forme d'onde de la courbe C4 sur la représentation graphique de la figure 6 éliminant ainsi les harmoniques de courant 11 et 13 lorsqu'il y a égalité entre les puissances absorbées par les deux transformateurs dodécaphasés. Ce résultat est ainsi obtenu car les paliers des deux transformateurs redresseurs dodécaphasés présentent un déphasage d'un angle de π/12 qui découle de la géométrie particulière des enroulements primaires et secondaires du transformateur redresseur 1 selon l'invention.

## Revendications

1. Transformateur redresseur (1) électrique statique dodécaphasé comprenant un transformateur (4) et un premier et un second circuits redresseurs triphasés (5, 6) destinés à être couplés à une charge (3), le transformateur (4) comportant un circuit primaire (10) doté de trois bobines primaires (12) et un circuit secondaire (11) comportant trois premières bobines secondaires (13) et trois secondes bobines secondaires (14) distinctes des premières bobines secondaires (13),
le circuit secondaire (11) du transformateur (4) comprenant une boucle de six bobines secondaires (13 et 14) formée par un raccordement électrique des trois premières bobines secondaires (13) avec les trois secondes bobines secondaires (14) du circuit secondaire (11), chaque seconde bobine secondaire (14) du transformateur (4) étant raccordée entre deux premières bobines secondaires (13) et chaque première bobine secondaire (13) étant raccordée entre deux secondes bobines secondaires (14), et les trois premières bobines secondaires (13) du transformateur (4) présentant un premier sens d'enroulement et les trois secondes bobines secondaires (14) présentant un second sens d'enroulement opposé au premier sens d'enroulement, **caractérisé en ce que** les trois bobines primaires (12) sont disposées selon une configuration en étoile,
les trois premières bobines secondaires (13) présentent une première dimension et les trois secondes bobines secondaires (14) présentent une seconde dimension distincte de la première dimension, les première et seconde dimensions étant choisies de sorte que les trois tensions mesurées entre deux bornes de sortie de premières bobines secondaires (13) présentent un déphasage de 30° avec les trois tensions mesurées entre deux bornes de sortie de secondes bobines secondaires (14), et l'enroulement de chaque bobine secondaire (13, 14) du transformateur (4) s'étend d'une première borne de raccordement électrique (15) à une seconde borne de raccordement électrique (16), les secondes bornes (16) des premières et secondes bobines (13, 14) étant électriquement raccordées au premier circuit redresseur triphasé (5) et les premières bornes (15) des premières et secondes bobines (13, 14) étant électriquement raccordées au second circuit redresseur triphasé (6).

2. Système électrique de conversion de tension comprenant au moins un transformateur redresseur électrique (1) selon la revendication 1.

3. Aéronef comprenant au moins un système électrique de conversion de tension selon la revendication 2.

## Patentansprüche

1. Zwölfphasiger statischer elektrischer Transformator-Gleichrichter (1), umfassend einen Transformator (4) sowie eine erste und eine zweite Dreiphasengleichrichterschaltung (5, 6), die dazu bestimmt sind, mit einer Last (3) gekoppelt zu werden, wobei der Transformator (4) einen Primärkreis (10), welcher mit drei Primärspulen (12) ausgestattet ist, sowie einen Sekundärkreis (11) umfasst, welcher drei erste Sekundärspulen (13) und drei zweite Sekundärspulen (14), die von den ersten Sekundärspulen (13) verschieden sind, umfasst,
wobei der Sekundärkreis (11) des Transformators (4) eine Schleife aus sechs Sekundärspulen (13, 14) umfasst, die durch eine elektrische Verbindung der drei ersten Sekundärspulen (13) mit den drei zweiten Sekundärspulen (14) des Sekundärkreises (11) gebildet ist, wobei jede zweite Sekundärspule (14) des Transformators (4) zwischen zwei ersten Sekundärspulen (13) angeschlossen ist und jede erste Sekundärspule (13) zwischen zwei zweiten Sekundärspulen (14) angeschlossen ist, und wobei die drei ersten Sekundärspulen (13) des Transformators (4) eine erste Wicklungsrichtung aufweisen und die drei zweiten Sekundärspulen (14) eine zu der ersten Wicklungsrichtung entgegengesetzte zweite Wicklungsrichtung aufweisen,

**dadurch gekennzeichnet, dass** die drei Primärspulen (12) in einer sternförmigen Konfiguration angeordnet sind,

die drei ersten Sekundärspulen (13) eine erste Abmessung aufweisen und die drei zweiten Sekundärspulen (14) eine von der ersten Abmessung verschiedene zweite Abmessung aufweisen, wobei die erste und die zweite Abmessung so gewählt sind, dass die drei Spannungen, die zwischen zwei Ausgangsanschlüssen von ersten Sekundärspulen (13) gemessen werden, eine Phasenverschiebung von 30° mit den drei Spannungen, die zwischen zwei Ausgangsanschlüssen von zweiten Sekundärspulen (14) gemessen werden, aufweisen, und

die Wicklung einer jeden Sekundärspule (13, 14) des Transformators (4) sich von einer ersten elektrischen Anschlussklemme (15) zu einer zweiten elektrischen Anschlussklemme (16) erstreckt, wobei die zweiten Klemmen (16) der ersten und der zweiten Spule (13, 14) mit der ersten Dreiphasengleichrichterschaltung (5) elektrisch verbunden sind und die ersten Klemmen (15) der ersten und der zweite Spule (13, 14) mit der zweiten Dreiphasengleichrichterschaltung (6) elektrisch verbunden sind.

2. Elektrisches System zur Spannungsumwandlung, umfassend wenigstens einen elektrischen Transformator-Gleichrichter (1) nach Anspruch 1.

3. Luftfahrzeug, das wenigstens ein elektrisches System zur Spannungsumwandlung nach Anspruch 2 umfasst.

**Claims**

1. A 12-phase static electrical transformer rectifier (1) comprising a transformer (4) and first and second three-phase rectifier circuits (5, 6) for coupling to a load (3), the transformer (4) comprising a primary circuit (10) having three primary coils (12) and a secondary circuit (11) comprising three first secondary coils (13) and three second secondary coils (14) that are distinct from the first secondary coils (13);

the secondary circuit (11) the transformer (4) comprising a loop of six secondary coils (13 and 14) formed by electrically connecting together the three first secondary coils (13) and the three second secondary coils (14) of the secondary circuit (11), each second secondary coil (14) of the transformer (4) being connected between two first secondary coils (13), and each first secondary coil (13) being connected between two second secondary coils (14), and the three first secondary coils (13) of the transformer (4) present a first winding direction, and the three second secondary coils (14) present a second winding direction opposite to the first winding direction,

**characterized in that** the three primary coils (12) are arranged in a star configuration,

the three first secondary coils (13) present a first dimension and the three second secondary coils (14) present a second dimension distinct from the first dimension, the first and second dimensions being selected in such a manner that the three voltages measured between two output terminals of first secondary coils (13) present a phase shift of 30° relative to the three voltages measured between the two output terminals of second secondary coils (14), and the winding of each secondary coil (13, 14) of the transformer (4) extends from a first electrical connection terminal (15) to a second electrical connection terminal (16), the second terminals (16) of the first and second coils (13, 14) being electrically connected to the first three-phase rectifier circuit (5), and the first terminals (15) of the first and second coils (13, 14) being electrically connected to the second three-phase rectifier circuit (6).

2. An electrical voltage conversion system comprising at least one electrical transformer rectifier (1) according to claim 1.

3. An aircraft including at least one electrical voltage conversion system according to claim 2.

FIG.1
ART ANTERIEUR

EP 3 357 151 B1

FIG.2

EP 3 357 151 B1

FIG.3

FIG.4

FIG.5

FIG.6

**RÉFÉRENCES CITÉES DANS LA DESCRIPTION**

**Documents brevets cités dans la description**

- WO 2012116263 A